# FASCICULE DE BREVET EUROPEEN

(11) **EP 2 379 450 B1**
(45) Date de publication et mention de la délivrance du brevet: **26.06.2013**
(21) Numéro de dépôt: 09796762.4
(22) Date de dépôt: 26.11.2009
(51) Int. Cl.: C01B 39/46, C01B 39/48, B01J 29/70, C01B 39/06, C01B 39/08

(54) **SOLIDE CRISTALLISE IM-20 ET SON PROCÉDÉ DE PRÉPARATION**
KRISTALLISIERTER FESTSTOFF IM-20 UND HERSTELLUNGSVERFAHREN DAFÜR
IM-20 CRYSTALLISED SOLID AND METHOD FOR MAKING SAME

(30) Priorité: 18.12.2008 FR 0807271
(43) Date de publication de la demande: 26.10.2011
(73) Titulaire: IFP Energies nouvelles, 92852 Rueil-Malmaison Cedex (FR)
(72) Inventeur: DODIN, Mathias, F-68100 Mulhouse (FR); LORGOUILLOUX, Yannick, F-87100 Limoges (FR); PAILLAUD, Jean-Louis, F-68100 Mulhouse (FR); CAULLET, Philippe, F-68110 Illzach (FR); PATARIN, Joël, F-68720 Flaxlanden (FR); BATS, Nicolas, F-69320 Feyzin (FR)
(86) Numéro de dépôt international: PCT/FR2009/001347
(87) Numéro de publication internationale: WO 2010/076399

(56) Documents cités:
- EP-A1- 1 518 827
- C. J. ADAMS, A. E. BRADLEY AND K. R. SEDDON: "Rapid Communication: The Synthesis of Mesoporous Materials Using Novel Ionic Liquid Templates in Water" AUSTRALIAN JOURNAL OF CHEMISTRY, [Online] 2001, XP002545181 Extrait de l'Internet: URL:http://www.publish.csiro.au/paper/CH01 191.htm> [extrait le 2009-09-10]
- BRIAN G. TREWYN, CHAD M. WHITMAN, AND VICTOR S.-Y. LIN: "Morphological Control of Room-Temperature Ionic Liquid Templated Mesoporous Silica Nanoparticles for Controlled Release of Antibacterial Agents" NANO LETTERS, vol. 4, no. 1, 28 septembre 2004 (2004-09-28), pages 2139-2143, XP002545182 DOI: 10.1021/nl048774r
- L. A. ASLANOV, M. A. ZAKHAROV, E. E. KNYAZEVA AND A. V. YATSENKO: "Preparation of mesoporous aluminum hydroxide and oxide in ionic liquids" RUSSIAN JOURNAL OF INORGANIC CHEMISTRY, vol. 52, no. 10, octobre 2007 (2007-10), pages 1511-1513, XP002545183 10.1134/S0036023607100051
- YANNICK MATHIEU, JEAN-LOUIS PAILLAUD, PHILIPPE CAULLET AND NICOLAS BATS: "Synthesis and characterization of IM-10: a new microporous silicogermanate with a novel topology" MICROPOROUS AND MESOPOROUS MATERIALS, vol. 75, no. 1-2, 12 octobre 2004 (2004-10-12), pages 13-22, XP002545184 doi:10.1016/j.micromeso.2004.06.023
- A. CORMA, M.-J. DIAZ CABAÑAS, J. MARTINEZ-TRIGUERO, F. REY AND J. RIUS,: "A large-cavity zeolite with wide pore windows and potential as an oil refining catalyst" NATURE, vol. 418, 2002, page 514, XP002545185 DOI: 10.1038/nature00924
- LIQIU TANG AND XIAODONG ZOU: "SU-21, a layered silicogermanate with organic amines covalently-bonded to germanium" MICROPOROUS AND MESOPOROUS MATERIALS, vol. 101, no. 1-2, avril 2007 (2007-04), pages 24-29, XP002545186 doi:10.1016/j.micromeso.2006.11.005
- H.LI AND O. M. YAGH: "Transformation of Germanium Dioxide to Microporous Germanate 4-Connected Nets" J. AM. CHEM. SOC, vol. 120, no. 40, 1998, pages 10569-10570, XP002545187 DOI: 10.1021/ja982384n
- L.A. VILLAESCUSA, P.A. BARRET AND M.A.: "ITQ-7: A new pure silica polymorph with a three-dimensional system of large pore channels" ANGEWANDTE CHEMIE - INTERNATIONAL EDITION, vol. 38, no. 13-14, 12 juillet 1999 (1999-07-12), pages 1997-2000, XP002545188

## Description

### Domaine technique

La présente invention se rapporte à un nouveau solide cristallisé appelé ci-après IM-20 présentant une nouvelle structure cristalline ainsi qu'au procédé de préparation dudit solide.

### Art antérieur

La recherche de nouveaux tamis moléculaires microporeux a conduit au cours des dernières années à la synthèse d'une grande variété de cette classe de produits. Une grande variété d'aluminosilicates à structure zéolithique caractérisés notamment par leur composition chimique, le diamètre des pores qu'ils contiennent, la forme et la géométrie de leur système microporeux a ainsi été développée.

Parmi les zéolithes synthétisées depuis une quarantaine d'années, un certain nombre de solides ont permis de réaliser des progrès significatifs dans les domaines de l'adsorption et de la catalyse. Parmi celles-ci, on peut citer la zéolithe Y (US 3,130,007) et la zéolithe ZSM-5 (US 3,702,886). Le nombre de nouveaux tamis moléculaires, recouvrant les zéolithes, synthétisés chaque année est en progression constante. Pour avoir une description plus complète des différents tamis moléculaires découverts, on peut utilement se référer à l'ouvrage suivant : "Atlas of Zeolite Framework Types", Ch. Baerlocher, W.M. Meier and D.H. Olson, Fifth Revised Edition, 2001, Elsevier. On peut citer la zéolithe NU-87 (US-5,178,748), la zéolithe MCM-22 (US-4,954,325) ou bien encore le gallophosphate (clovérite) de type structural CLO (US-5,420,279), ou encore les zéolithes ITQ-12 (US-6,471,939), ITQ-13 (US-6,471,941), CIT-5 (US-6,043,179), ITQ-21 (WO-02/092511), ITQ-22 (Corma, A. et al, Nature Materials 2003, 2, 493), SSZ-53 (Burton, A., et al, Chemistry : a Eur. Journal, 2003, 9, 5737), SSZ-59 (Burton, A., et al, Chemistry : a Eur. Journal, 2003, 9, 5737), SSZ-58 (Burton, A., et al, J Am. Chem. Soc., 2003, 125, 1633) et UZM-5 (Blackwell, C.S. et al, Angew. Chem., Int. Ed., 2003, 42 , 1737).

Plusieurs des zéolithes précédemment citées ont été synthétisées en milieu fluorure dans lequel l'agent mobilisateur n'est pas l'ion hydroxyde habituel mais l'ion fluorure selon un procédé initialement décrit par Flanigen et al (US-4,073,865), puis développé par J.-L. Guth et al. (Proc. Int. Zeol. Conf., Tokyo, 1986, p. 121). Les pH des milieux de synthèses sont typiquement proches de la neutralité. Un des avantages de ces systèmes réactionels fluorés est de permettre l'obtention de zéolithes purement siliciques contenant moins de défauts que les zéolithes obtenues en milieu OH- traditionnel (J.M. Chézeau et al., Zeolites, 1991, 11, 598). Un autre avantage décisif lié à l'utilisation de milieux réactionnels fluorés est de permettre l'obtention de nouvelles topologies de charpente silicique contenant des doubles cycles à quatre tétraèdres (D4R), comme dans le cas des zéolithes ITQ-7, ITQ-12 et ITQ-13. Par ailleurs, l'utilisation conjointe de sources de germanium et de silicium dans les milieux de synthèse peut aussi permettre l'obtention de nouvelles charpentes de ce type, c'est-à-dire contenant des unités D4R, aussi bien en milieu basique classique non fluoré qu'en milieu fluoré, comme dans le cas des zéolithes ITQ-17 et ITQ-21 (A. Corma et al, Chem. Commun., 2001, 16, 1486, Chem. Commun., 2003, 9, 1050), ou IM-12 (JL.Paillaud et al, Science, 2004, 304, 990).

La publication "The Synthesis of Mesoporous Materials Using Novel Ionic Liquid Templates in Water", C. J. Adams, A. E. Bradley and K. R. Seddon, Australian Journal of Chemistry, vol. 54, no.11, pages 679-681, 2001, divulgue l'utilisation de sels du type 1-alkyl-3-méthylimidazolium pour la synthèse de MCM-41. Toutefois, ce document ne divulgue pas ni ne suggère l'utilisation du 1-butyl-3-méthylimidazolium pour la synthèse d'une nouvelle charpente.

La publication "Morphological Control of Room-Temperature Ionic Liquid Templated Mesoporous Silica Nanoparticles for Controlled Release of Antibacterial Agents", B. G. Trewyn, C. M. Whitman and V. S.-Y. Lin, Nano Letters, vol. 4, no. 1, pages 2139-2143, 2004, divulgue également l'utilisation de 1-alkyl-3-méthylimidazolium, pour la synthèse de nanoparticules siliciques mésoporeuses. Toutefois, ce document ne divulgue point, ni ne suggère qu'une structure fondamentalement différente du MCM-41 peut être obtenue contrairement à la présente invention.

L'article "Preparation of mesoporous aluminum hydroxide and oxide in ionic liquids", L. A. Aslanov, M. A. Zakharov, E. E. Knyazeva and A. V. Yatsenko, Russian Journal of Inorganic Chemistry, vol. 52, no. 10, pages 1511-1513, 2007, décrit l'utilisation du 1-butyl-3-méthylimidazolium uniquement pour la synthèse d'hydroxyde d'aluminium mésoporeux.

Le document "Synthesis and characterization of IM-10: a new microporous silicogermanate with a novel topology", Y. Mathieu, Jean-Louis Paillaud, P. Caullet and N. Bats, Microporous and Mesoporous Materials, vol. 75, no. 1-2, pages 13-22, 2004, divulgue un silicogermanate contenant du fluor (matériau IM-10). Une comparaison avec le spectre aux rayons-X de la présente demande permet toutefois de noter des différences et de conclure que le silicogermanate contenant du fluor de ce document est différent de celui de la présente invention. En outre, de l'hexaméthonium est utilisé pour la synthèse du IM-10 et non du 1-butyl-3-méthylimidazolium comme dans la présente invention.

La publication du brevet EP 1 518 827 A1, divulgue le spectre aux rayons-X du matériau IM-12. Une comparaison avec le spectre aux rayons-X de la présente invention permet de noter des différences et de conclure que les matériaux IM-12 et IM-20 sont différents. En outre, le brevet EP 1 518 827 A1 n'utilise pas le 1-butyl-3-méthylimidazolium pour la synthèse de IM-12.

### Description de l'invention

La présente invention a pour objet un nouveau solide cristallisé, appelé solide cristallisé IM-20, présentant une nouvelle structure cristalline. Ledit solide présente une composition chimique exprimée par la formule générale suivante : mXO₂ : nGeO₂ : pZ₂O₃ : qR : sF : wH₂O dans laquelle R représente une ou plusieurs espèce(s) organique(s), X représente un ou plusieurs élément(s) tétravalent(s) différent(s) du germanium, Z représente au moins un élément trivalent et F est le fluor, m, n, p, q, s et w représentant respectivement le nombre de moles de XO₂, GeO₂, Z₂O₃, R, F et H₂O et m est compris entre 0,3 et 0,8, n est compris entre 0,2 et 0,7, p est compris entre 0 et 0,1, q est compris entre 0 et 0,2, s est compris entre 0 et 0,2 et w est compris entre 0 et 1.

Le solide cristallisé IM-20 selon l'invention présente, sous sa forme brute de synthèse, un diagramme de diffraction de rayons X incluant au moins les raies inscrites dans le tableau 1. Le solide cristallisé IM-20 selon l'invention présente, sous sa forme calcinée, un diagramme de diffraction de rayons X incluant au moins les raies inscrites dans le tableau 2. Ce nouveau solide cristallisé IM-20 présente une nouvelle structure cristalline.

Ces diagrammes de diffraction sont obtenus par analyse radiocristallographique au moyen d'un diffractomètre en utilisant la méthode classique des poudres avec le rayonnement Kα₁ du cuivre (λ = 1,5406Å). A partir de la position des pics de diffraction représentée par l'angle 2θ, on calcule, par la relation de Bragg, les équidistances réticulaires dₕₖₗ caractéristiques de l'échantillon. L'erreur de mesure Δ(dₕₖₗ) sur dₕₖₗ est calculée grâce à la relation de Bragg en fonction de l'erreur absolue Δ(2θ) affectée à la mesure de 2θ. Une erreur absolue Δ(2θ) égale à ± 0,02° est communément admise. L'intensité relative I/I₀ affectée à chaque valeur de dₕₖₗ est mesurée d'après la hauteur du pic de diffraction correspondant. Le diagramme de diffraction des rayons X du solide cristallisé IM-20 selon l'invention, sous sa forme brute de synthèse, comporte au moins les raies aux valeurs de dₕₖₗ données dans le tableau 1. Le diagramme de diffraction des rayons X du solide cristallisé IM-20 selon l'invention, sous sa forme calcinée, comporte au moins les raies aux valeurs de dₕₖₗ données dans le tableau 2. Dans la colonne des dₕₖₗ, on a indiqué les valeurs moyennes des distances inter-réticulaires en Angstrôms (Å). Chacune de ces valeurs doit être affectée de l'erreur de mesure Δ(dₕₖₗ) comprise entre ± 0,2Å et ± 0,003Å.

**Tableau 1 : Valeurs moyennes des dₕₖₗ et intensités relatives mesurées sur un diagramme de diffraction de rayons X du solide cristallisé IM-20 brut de synthèse**

| 2 thêta (°) | dₕₖₗ (Å) | I/I₀ | 2 thêta (°) | dₕₖₗ (Å) | I/I₀ |
|---|---|---|---|---|---|
| 3,49 | 25,32 | ff | 22,27 | 3,99 | mf |
| 6,93 | 12,75 | FF | 22,52 | 3,94 | f |
| 6,99 | 12,64 | FF | 22,99 | 3,87 | m |
| 7,61 | 11,61 | mf | 23,36 | 3,80 | mf |
| 7,76 | 11,39 | f | 23,54 | 3,78 | ff |
| 9,85 | 8,97 | mf | 24,06 | 3,70 | mf |
| 10,30 | 8,59 | m | 24,29 | 3,66 | ff |
| 10,87 | 8,13 | mf | 24,70 | 3,60 | m |
| 12,46 | 7,10 | f | 25,08 | 3,55 | ff |
| 12,98 | 6,81 | ff | 25,33 | 3,51 | ff |
| 17,57 | 5,04 | ff | 25,87 | 3,44 | ff |
| 19,79 | 4,48 | ff | 26,95 | 3,31 | ff |
| 20,69 | 4,29 | f | 27,98 | 3,19 | ff |
| 20,79 | 4,27 | f | 28,45 | 3,13 | ff |
| 21,13 | 4,20 | ff | 32,43 | 2,76 | ff |
| 22,06 | 4,03 | f | 33,97 | 2,64 | ff |

**Tableau 2 : Valeurs moyennes des dₕₖₗ et intensités relatives mesurées sur un diagramme de diffraction de rayons X du solide cristallisé IM-20 calciné**

| 2 thêta (°) | dₕₖₗ (A) | I/I₀ | 2 thêta (°) | dₕₖₗ (Å) | I/I₀ |
|---|---|---|---|---|---|
| 3,49 | 25,27 | ff | 18,21 | 4,87 | ff |
| 6,95 | 12,72 | FF | 19,82 | 4,48 | ff |
| 7,02 | 12,59 | F | 20,70 | 4,29 | ff |
| 7,63 | 11,58 | f | 21,15 | 4,20 | ff |
| 7,79 | 11,34 | ff | 22,10 | 4,02 | ff |
| 8,38 | 10,54 | ff | 22,32 | 3,98 | f |
| 9,87 | 8,95 | ff | 22,57 | 3,94 | ff |
| 10,32 | 8,56 | f | 22,99 | 3,86 | ff |
| 10,90 | 8,11 | f | 23,39 | 3,80 | ff |
| 12,47 | 7,09 | ff | 24,05 | 3,70 | ff |
| 12,98 | 6,81 | ff | 24,30 | 3,66 | ff |
| 13,91 | 6,36 | ff | 24,70 | 3,60 | ff |
| 14,05 | 6,30 | ff | 25,10 | 3,54 | ff |
| 15,27 | 5,80 | ff | 25,30 | 3,52 | ff |
| 15,89 | 5,57 | ff | 28,05 | 3,18 | ff |
| 17,59 | 5,04 | ff | 28,67 | 3,11 | ff |

| | | | | | |
|---|---|---|---|---|---|
| où FF = très fort ; m = moyen ; f = faible ; F = fort ; mf = moyen faible ; ff = très faible. L'intensité relative I/I₀ est donnée en rapport à une échelle d'intensité relative où il est attribué une valeur de 100 à la raie la plus intense du diagramme de diffraction des rayons X : ff<15 ; 15≤f<30;30≤mf<50;50≤m<65;65≤F<85;FF≥85. | | | | | |

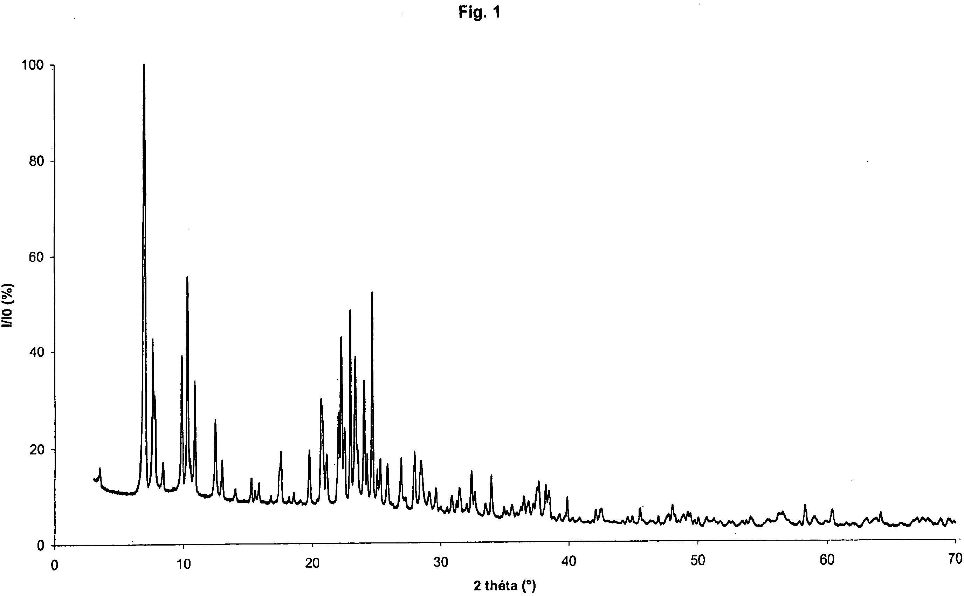

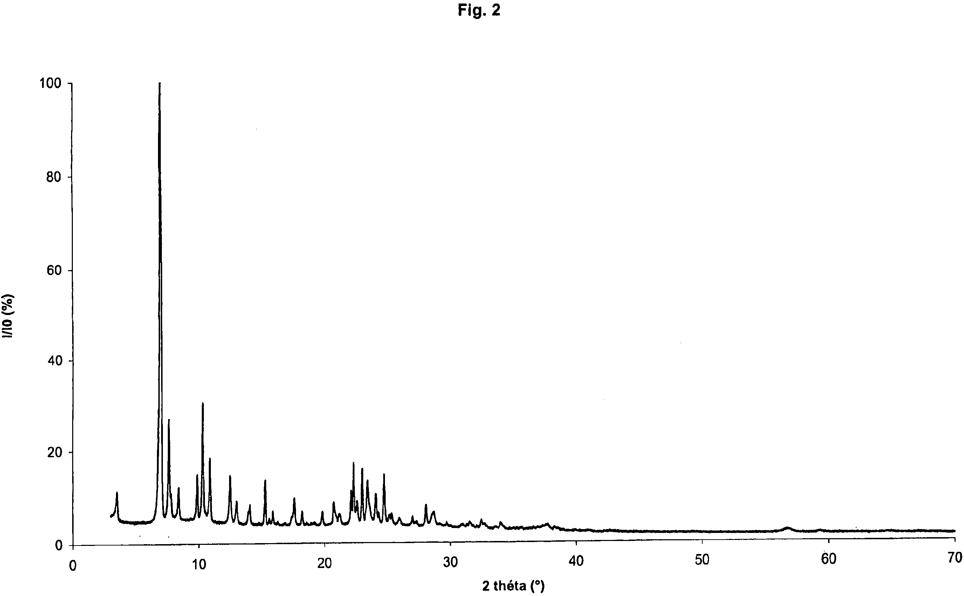

Le solide cristallisé IM-20 selon l'invention présente une nouvelle structure cristalline de base ou topologie qui est caractérisée par ses diagrammes de diffraction X sous les formes brute de synthèse et calcinée donnés par la figure 1 et la figure 2 respectivement.

Ledit solide IM-20 présente une composition chimique définie par la formule générale suivante : mXO₂ : nGeO₂ : pZ₂O₃ : qR : sF : wH₂O (I), où R représente une ou plusieurs espèce(s) organique(s), X représente un ou plusieurs élément(s) tétravalent(s) différent(s) du germanium, Z représente au moins un élément trivalent et F est le fluor. Dans la formule (I), m, n, p, q, s et w représentent respectivement le nombre de moles de XO₂, GeO₂, Z₂O₃, R, F et H₂O et m est compris entre 0,3 et 0,8, n est compris entre 0,2 et 0,7, p est compris entre 0 et 0,1, q est compris entre 0 et 0,2, s est compris entre 0 et 0,2 et w est compris entre 0 et 1. Avantageusement, le rapport molaire m/n de la charpente du solide cristallisé IM-20 selon l'invention est compris entre 1 et 10, de préférence entre 1 et 5 et de manière très préférée entre 1,5 et 2. Le rapport molaire {(n+m)/p} est supérieur ou égal à 10 et est de manière préférée supérieur ou égal à 20. La valeur de p est comprise entre 0 et 0,1, très préférentiellement comprise entre 0 et 0,05 et de manière encore plus préférée comprise entre 0,005 et 0,02. La valeur de q est comprise entre 0 et 0,2, avantageusement entre 0,02 et 0,2 et très avantageusement entre 0,05 et 0,15. Selon l'invention, s est compris entre 0 et 0,2, de manière préférée, s est compris entre 0,01 et 0,2 et de manière très préférée s est compris entre 0,02 et 0,1. La valeur prise par w est, selon l'invention, comprise entre 0 et 1, de préférence comprise entre 0,3 et 0,5. Sous la forme sèche et calcinée du solide cristallisé IM-20 selon l'invention, les valeurs de q, s et w sont nulles.

Conformément à l'invention, X est préférentiellement choisi parmi le silicium, l'étain et le titane, très préférentiellement X est le silicium, et Z est préférentiellement choisi parmi l'aluminium, le bore, le fer, l'indium et le gallium et très préférentiellement Z est l'aluminium. De manière préférée, X est le silicium : le solide cristallisé IM-20 selon l'invention est alors, lorsque l'élément Z est présent, un métallogermanosilicate cristallisé présentant un diagramme de diffraction des rayons X identique à celui décrit dans le tableau 1 lorsqu'il se trouve sous sa forme brute de synthèse et identique à celui décrit dans le tableau 2 lorsqu'il se trouve sous sa forme calcinée. De manière encore plus préférée, X est le silicium et Z est l'aluminium : le solide cristallisé IM-20 selon l'invention est alors un aluminogermanosilicate cristallisé présentant un diagramme de diffraction des rayons X identique à celui décrit dans le tableau 1 lorsqu'il se trouve sous sa forme brute de synthèse et identique à celui décrit dans le tableau 2 lorsqu'il se trouve sous sa forme calcinée.

Dans le cas où le solide cristallisé IM-20 selon l'invention se présente sous sa forme brute de synthèse, c'est-à-dire directement issu de la synthèse et préalablement à toute étape de calcination(s) et/ou d'échange(s) d'ions bien connue de l'Homme du métier, ledit solide IM-20 comporte au moins une espèce organique telle que celle décrite ci-après ou ses produits de décomposition, ou encore ses précurseurs. Sous forme brute de synthèse, la (ou les) espèce(s) organique(s) R présente(s) dans la formule générale définissant le solide IM-20 est (sont) au moins en partie, et de préférence entièrement, la(les)dite(s) espèce(s) organique(s). Selon un mode préféré de l'invention, R est le cation 1-butyl-3-méthylimidazolium. Ladite espèce organique R, qui joue le rôle de structurant, peut être éliminée par les voies classiques de l'état de la technique comme des traitements thermiques et/ou chimiques.

Le solide cristallisé IM-20 selon l'invention est de préférence un solide zéolithique.

L'invention concerne également un procédé de préparation du solide cristallisé IM-20 dans lequel on fait réagir un mélange aqueux comportant au moins une source d'au moins un oxyde de germanium, au moins une source d'au moins un oxyde XO₂, éventuellement au moins une source d'au moins un oxyde Z₂O₃, au moins une espèce organique R et au moins une source d'ions fluorures, le mélange présentant, la composition molaire suivante :

| | |
|---|---|
| (XO₂+GeO₂)/Z₂O₃ | : au moins 5, de préférence au moins 10, |
| H₂O/(XO₂+GeO₂) | : 1 à 50, de préférence 5 à 20, |
| R/(XO₂+GeO₂) | : 0,3 à 3, de préférence 0,4 à 1,5, |
| XO₂/GeO₂ | : 0,5 à 10, de préférence 1 à 10, et de manière très préférée de 1 à 5, |
| F/(XO₂+ GeO₂) | : 0,1 à 2, de préférence 0,2 à 1, |

où X est un ou plusieur(s) élément(s) tétravalent(s) différent(s) du germanium, de préférence choisi(s) parmi le silicium, l'étain et le titane et très préférentiellement X est le silicium, Z est un ou plusieurs élément(s) trivalent(s) choisi(s) dans le groupe formé par les éléments suivants : aluminium, fer, bore, indium et gallium, de préférence l'aluminium.

Conformément au procédé selon l'invention, R est une espèce organique jouant le rôle de structurant organique. R est le composé 1-butyl-3-méthylimidazolium.

La source de l'élément X peut être tout composé comprenant l'élément X et pouvant libérer cet élément en solution aqueuse sous forme réactive. Avantageusement, lorsque l'élément X est le silicium, la source de silice peut être l'une quelconque de celles couramment utilisées dans la synthèse des zéolithes, par exemple de la silice solide en poudre, de l'acide silicique, de la silice colloïdale ou de la silice dissoute ou du tétraéthoxysilane (TEOS). Parmi les silices en poudre, on peut utiliser les silices précipitées, notamment celles obtenues par précipitation à partir d'une solution de silicate de métal alcalin, telles que des silices aérosiles, des silices pyrogénées, par exemple du "CAB-O-SIL" et des gels de silice. On peut utiliser des silices colloïdales présentant différentes tailles de particules, par exemple de diamètre équivalent moyen compris entre 10 et 15 nm ou entre 40 et 50 nm, telles que celles commercialisées sous la marque déposée "LUDOX".

La source de germanium peut être tout composé comprenant l'élément germnaium et pouvant libérer cet élément en solution aqueuse sous forme réactive. La source de germanium peut être un oxyde de germanium cristallisé sous les formes dites quartz ou rutile. On peut aussi utiliser des sources de germanium telles que le tétraéthoxygermanium ou le tétraisopropoxygermanium. La source de germanium peut être de préférence un oxyde de germanium amorphe GeO₂.

La source de l'élément Z peut être tout composé comprenant l'élément Z et pouvant libérer cet élément en solution aqueuse sous forme réactive. Dans le cas préféré où Z est l'aluminium, la source d'alumine est de préférence de l'aluminate de sodium, ou un sel d'aluminium, par exemple du chlorure, du nitrate, de l'hydroxyde ou du sulfate, un alkoxyde d'aluminium ou de l'alumine proprement dite, de préférence sous forme hydratée ou hydratable, comme par exemple de l'alumine colloïdale, de la pseudoboehmite, de l'alumine gamma ou du trihydrate alpha ou bêta. On peut également utiliser des mélanges des sources citées ci-dessus.

Le fluor peut être introduit sous forme de sels de métaux alcalins ou d'ammonium comme par exemple NaF, NH₄F, NH₄HF₂ ou sous forme d'acide fluorhydrique ou encore sous forme de composés hydrolysables pouvant libérer des anions fluorures dans l'eau comme le fluorure de silicium SiF₄ ou les fluorosilicates d'ammonium (NH₄)₂SiF₆ ou de sodium Na₂SiF₆.

Selon un mode de réalisation préféré du procédé selon l'invention, on fait réagir un mélange aqueux comportant de la silice, éventuellement de l'alumine, un oxyde de germanium, du 1-butyl-3-méthylimidazolium et une source d'ions fluorures.

Le procédé selon l'invention consiste à préparer un mélange réactionnel aqueux appelé gel et renfermant au moins une source d'au moins un oxyde de germanium, au moins une source d'au moins un oxyde XO₂, éventuellement au moins une source d'au moins un oxyde Z₂O₃, au moins une source d'ions fluorures, et au moins une espèce organique R. Les quantités desdits réactifs sont ajustées de manière à conférer à ce gel une composition permettant sa cristallisation en solide cristallisé IM-20 de formule générale mXO₂ : nGeO₂ : pZ₂O₃ : qR : sF : wH₂O, où m, n, p, q, s et w répondent aux critères définis plus haut. Puis le gel est soumis à un traitement hydrothermal jusqu'à ce que le solide cristallisé IM-20 se forme. Le gel est avantageusement mis sous conditions hydrothermales sous une pression de réaction autogène, éventuellement en ajoutant du gaz, par exemple de l'azote, à une température comprise entre 120°C et 200°C, de préférence entre 140°C et 180°C, et de manière encore plus préférentielle à une température comprise entre 150°C et 175°C jusqu'à la formation des cristaux de solide IM-20 selon l'invention. La durée nécessaire pour obtenir la cristallisation varie généralement entre 1 heure et plusieurs mois, de préférence entre 10 heures et 20 jours, en fonction de la composition des réactifs dans le gel, de l'agitation et de la température de réaction. La mise en réaction s'effectue sous agitation ou en absence d'agitation.

Il peut être avantageux d'additionner des germes au mélange réactionnel afin de réduire le temps nécessaire à la formation des cristaux et/ou la durée totale de cristallisation. Il peut également être avantageux d'utiliser des germes afin de favoriser la formation du solide cristallisé IM-20 au détriment d'impuretés: De tels germes comprennent des solides cristallisés, notamment des cristaux de solide IM-20. Les germes cristallins sont généralement ajoutés dans une proportion comprise entre 0,01 et 10 % de la masse des oxydes (XO₂+GeO₂), XO₂ étant de préférence de la silice, utilisée dans le mélange réactionnel.

A la fin de la réaction, la phase solide est filtrée et lavée ; elle est ensuite prête pour des étapes ultérieures telles que le séchage, la déshydratation et la calcination et/ou l'échange d'ions. Pour ces étapes, toutes les méthodes conventionnelles connues de l'Homme du métier peuvent être employées.

L'étape de calcination s'effectue avantageusement par une ou plusieurs étapes de chauffage à des températures allant de 100 à 1000°C pour des durées allant de quelques heures à plusieurs jours. De manière préférée, pour obtenir la forme calcinée du solide cristallisé IM-20 selon l'invention, le solide cristallisé sous sa forme brute de synthèse subit tout d'abord un chauffage sous balayage d'un gaz neutre, par exemple sous balayage d'azote, à une température préférentiellement comprise entre 100 et 250°C pendant une durée avantageusement comprise entre 2 et 8 heures puis une calcination sous atmosphère d'un gaz neutre, par exemple sous atmosphère d'azote, à une température préférentiellement comprise entre 400 et 700°C pendant une durée avantageusement comprise entre 6 et 10 heures. A la suite de ces premiers traitements, le solide cristallisé IM-20 obtenu est calciné à une température comprise entre 400 et 700°C pendant une durée comprise entre 6 et 10 heures sous flux d'air puis encore pendant une durée préférentiellement comprise entre 6 et 10 heures sous flux d'oxygène.

La présente invention concerne également l'utilisation dudit solide IM-20 en tant qu'adsorbant. De préférence, ledit solide IM-20 est débarrassé de l'espèce organique, de préférence du cation 1-butyl-3-méthylimidazolium, lorsqu'il est utilisé comme adsorbant. Lorsqu'il est utilisé comme adsorbant, le solide cristallisé IM-20 selon l'invention est généralement dispersé dans une phase matricielle inorganique qui contient des canaux et des cavités qui permettent l'accès du fluide à séparer au solide cristallisé. Ces matrices sont préférentiellement des oxydes minéraux, par exemple des silices, des alumines, des silices-alumines ou des argiles. La matrice représente de manière générale entre 2 et 25% en masse de l'adsorbant ainsi formé.

L'invention est illustrée au moyen des exemples suivants.

### Exemple 1 : préparation d'un solide cristallisé IM-20 selon l'invention.

4,335 g d'hydroxyde de 1-butyl-3-méthylimidazolium (Solvionic) sont ajoutés à 9,17 mL d'eau distillée dans un récipient en Téflon de 20 mL de volume intérieur. 2,330 g d'oxyde de germanium (Aldrich) sont ensuite ajoutés à cette solution. Le mélange est agité pendant 15 minutes à l'aide d'un agitateur magnétique. 2,002 g d'Aerosil 200 (silice précipitée, Degussa) sont alors introduits. Le mélange est ensuite agité pendant 2 heures à température ambiante. 1,218 ml (1,389 g) de solution aqueuse de HF (acide fluorhydrique 40 % massique, Riedel de Haën) sont ensuite ajoutés. Le mélange est alors agité pendant 15 minutes. Après pesée et ajustement de la teneur en eau requise, la composition molaire du mélange obtenu est : 0,6 SiO₂ : 0,4 GeO₂ : 0,5 1-butyl-3-méthylimidazolium : 0,5 HF : 10H₂O.

La chemise en Téflon contenant le mélange de synthèse (pH ~ 9) est alors introduite dans un autoclave, qui est placé dans une étuve à 170 °C pour une durée de 14 jours en absence d'agitation.

Après filtration, le produit obtenu est lavé plusieurs fois avec de l'eau distillée. Il est ensuite séché à 70 °C pendant 24 heures. La masse de produit sec obtenue est d'environ 4,23 g.

Le produit solide séché subit tout d'abord un chauffage sous balayage d'azote à la tempétraure de 200°C pendant 4 heures puis une calcination toujours sous atmosphère d'azote à 550°C pendant 8 heures. A la suite de ces premiers traitements, la solide obtenu est calciné à 550°C pendant 8 heures sous flux d'air puis encore 8 heures sous flux d'oxygène.

Le solide obtenu a été analysé par diffraction des rayons X et identifié comme étant constitué de solide cristallisé IM-20 : le diffractogramme effectué sur le solide IM-20 est donné sur la figure 2.

### Exemple 2 : préparation d'un solide cristallisé IM-20 selon l'invention

3,476 g d'hydroxyde de 1-butyl-3-méthylimidazolium (Solvionic) sont ajoutés à 8,30 mL d'eau distillée dans un récipient en Téflon de 20 mL de volume intérieur. 1,862 g d'oxyde de germanium (Aldrich) sont ensuite ajoutés à cette solution. Le mélange est agité pendant 15 minutes à l'aide d'un agitateur magnétique. 5,945 ml (5,553 g) de TEOS (tétraéthoxysilane, Aldrich) sont alors introduits. Le mélange est ensuite agité pendant 48 heures à température ambiante, afin d'évaporer l'éthanol formé par l'hydrolyse du TEOS. 0,975 ml (1,113 g) de solution aqueuse de HF (acide fluorhydrique 40 % massique, Riedel de Haën) sont ensuite ajoutés. Le mélange est alors agité pendant 15 minutes. Après pesée et ajustement de la teneur en eau requise, la composition molaire du mélange obtenu est : 0,6 SiO₂ : 0,4 GeO₂: 0,5 1-butyl-3-méthylimidazolium : 0,5 HF : 10H₂O.

La chemise en Téflon contenant le mélange de synthèse (pH ~ 9) est alors introduite dans un autoclave, qui est placé dans une étuve à 170 °C pour une durée de 14 jours en absence d'agitation.

Après filtration, le produit obtenu est lavé plusieurs fois avec de l'eau distillée. Il est ensuite séché à 70 °C pendant 24 heures. La masse de produit sec obtenue est d'environ 2,45 g.

Le produit solide séché subit tout d'abord un chauffage sous balayage d'azote à la température de 200°C pendant 4 heures puis une calcination toujours sous atmosphère d'azote à 550°C pendant 8 heures. A la suite de ces premiers traitements, le solide obtenu est calciné à 550°C pendant 8 heures sous flux d'air puis encore 8 heures sous flux d'oxygène.

Le solide obtenu a été analysé par diffraction des rayons X et identifié comme étant constitué de solide cristallisé IM-20 : le diffractogramme effectué sur le solide IM-20 est donné sur la figure 2.

### Exemple 3 : préparation d'un solide cristallisé IM-20 selon l'invention

6,952 g d'hydroxyde de 1-butyl-3-méthylimidazolium (Solvionic) sont ajoutés à 7,64 mL d'eau distillée dans un récipient en Téflon de 20 mL de volume intérieur. 0,349 g d'hydroxyde d'aluminium (63 à 67% en masse d'Al₂O₃, Fluka) et 1,862 g d'oxyde de germanium (Aldrich) sont ensuite ajoutés à cette solution. Le mélange est agité pendant 1 heure à l'aide d'un agitateur magnétique. Environ 0,070 g du produit de la synthèse décrite dans l'exemple 1 préalablement broyé (soit 2% en masse par rapport aux oxydes SiO₂ et GeO₂) sont alors introduits en tant que germes, puis le mélange est agité pendant 15 minutes. 5,945 ml (5,553 g) de TEOS (tétraéthoxysilane, Aldrich) sont alors introduits. Le mélange est ensuite agité pendant 48 heures à température ambiante, afin d'évaporer l'éthanol formé par l'hydrolyse du TEOS. 1,952 ml (2,225 g) de solution aqueuse de HF (acide fluorhydrique 40% massique, Riedel de Haën) sont alors ajoutés puis le mélange est agité pendant 15 minutes. Après pesée et ajustement de la teneur en eau requise, la composition molaire du mélange obtenu est : 0,6 SiO₂ : 0,4 GeO₂ : 0,05 Al₂O₃ : 1 1-butyl-3-méthylimidazolium : 1 HF : 10 H₂O (+ 2% en masse de germes par rapport aux oxydes SiO₂ et GeO₂).

La chemise en Téflon contenant le mélange de synthèse (pH ~ 9) est alors introduite dans un autoclave, qui est placé dans une étuve à 170 °C pour une durée de 14 jours en absence d'agitation.

Après filtration, le produit obtenu est lavé plusieurs fois avec de l'eau distillée. Il est ensuite séché à 70 °C pendant 24 heures. La masse de produit sec obtenue est d'environ 2,27 g.

Le produit solide séché subit tout d'abord un chauffage sous balayage d'azote à la température de 200°C pendant 4 heures puis une calcination toujours sous atmosphère d'azote à 550°C pendant 8 heures. A la suite de ces premiers traitements, le solide obtenu est calciné à 550°C pendant 8 heures sous flux d'air puis encore 8 heures sous flux d'oxygène.

Le solide obtenu a été analysé par diffraction des rayons X et identifié comme étant constitué de solide cristallisé IM-20 : le diffractogramme effectué sur le solide IM-20 est donné sur la figure 2.

### Exemple 4 : préparation d'un adsorbant contenant le solide cristallisé IM-20.

Le solide utilisé est le solide calciné de l'exemple 1. Il est mis sous forme d'extrudés par malaxage avec de la boehmite (Pural SB3, Sasol) dans un malaxeur à bras en Z et extrusion de la pâté obtenue avec une extrudeuse piston. Les extrudés sont alors séchés à 120°C pendant 12 h sous air et calcinés à 550°C pendant 2 heures sous flux d'air dans un four à moufle. L'adsorbant ainsi préparé est composé de 80% poids du solide zéolithique IM-20 et de 20% poids d'alumine.

## Revendications

1. Solide cristallisé IM-20 présentant sous sa forme calcinée un diagramme de diffraction des rayons X incluant au moins les raies inscrites dans le tableau ci-dessous :
| 2 thêta (°) | dₕₖₗ (Å) | I/I₀ | 2 thêta (°) | dₕₖₗ (Å) | I/I₀ |
|---|---|---|---|---|---|
| 3,49 | 25,27 | ff | 18,21 | 4,87 | ff |
| 6,95 | 12,72 | FF | 19,82 | 4,48 | ff |
| 7,02 | 12,59 | F | 20,70 | 4,29 | ff |
| 7,63 | 11,58 | f | 21,15 | 4,20 | ff |
| 7,79 | 11,34 | ff | 22,10 | 4,02 | ff |
| 8,38 | 10,54 | ff | 22,32 | 3,98 | f |
| 9,87 | 8,95 | ff | 22,57 | 3,94 | ff |
| 10,32 | 8,56 | f | 22,99 | 3,86 | ff |
| 10,90 | 8,11 | f | 23,39 | 3,80 | ff |
| 12,47 | 7,09 | ff | 24,05 | 3,70 | ff |
| 12,98 | 6,81 | ff | 24,30 | 3,66 | ff |
| 13,91 | 6,36 | ff | 24,70 | 3,60 | ff |
| 14,05 | 6,30 | ff | 25,10 | 3,54 | ff |
| 15,27 | 5,80 | ff | 25,30 | 3,52 | ff |
| 15,89 | 5,57 | ff | 28,05 | 3,18 | ff |
| 17,59 | 5,04 | ff | 28,67 | 3,11 | ff |
où FF = très fort ; m = moyen ; f = faible ; F = fort ; mf = moyen faible ; ff = très faible et présentant une composition chimique exprimée par la formule générale suivante : mXO₂ : nGeO₂ : pZ₂O₃ : qR : sF : wH₂O dans laquelle R représente une ou plusieurs espèce(s) organique(s), X représente un ou plusieurs élément(s) tétravalent(s) différent(s) du germanium, Z représente au moins un élément trivalent et F est le fluor, m, n, p, q, s et w représentant respectivement le nombre de moles de XO₂, GeO₂, Z₂O₃, R, F et H₂O et m est compris entre 0,3 et 0,8, n est compris entre 0,2 et 0,7, p est compris entre 0 et 0,1, q est compris entre 0 et 0,2, s est compris entre 0 et 0,2 et w est compris entre 0 et 1.

2. Solide cristallisé IM-20 selon la revendication 1 dans lequel X est le silicium.

3. Solide cristallisé IM-20 selon la revendication 1 ou la revendication 2 dans lequel Z est l'aluminium.

4. Solide cristallisé IM-20 selon l'une des revendications 1 à 3 dans lequel le rapport molaire {(n+m)/p} est supérieur ou égal à 10, p est compris entre 0,005 et 0,02, q est compris entre 0 et 0,2, s est compris entre 0 et 0,2 et w est compris entre 0 et 1.

5. Procédé de préparation d'un solide cristallisé IM-20 selon l'une des revendications 1 à 4 consistant à procéder au mélange, en milieu aqueux, d'au moins une source d'au moins un oxyde de germanium, d'au moins une source d'au moins un oxyde XO₂, éventuellement d'au moins une source d'au moins un oxyde Z₂O₃, d'au moins une source d'ions fluorures, et d'au moins une espèce organique R, la composition molaire du mélange réactionnel est telle que :
| | |
|---|---|
| (XO₂+GeO₂)/Z₂O₃ | : au moins 5, |
| H₂O/(XO₂+GeO₂) | : 1 à 50, |
| R/(XO₂+GeO₂) | : 0,3 à 3, |
| XO₂/GeO₂ | : 0,5 à 10, |
| F/(XO₂+ GeO₂) | : 0,1 à 2, |
et ladite espèce organique R est le cation 1-butyl-3-méthylimidazolium , puis à procéder au traitement hydrothermal dudit mélange jusqu'à ce que ledit solide cristallisé IM-20 se forme.

6. Procédé de préparation selon la revendications 5 tel que des germes sont additionnés au mélange réactionnel.

7. Utilisation du solide cristallisé IM-20 selon l'une des revendications 1 à 4 ou préparé selon l'une des revendications 5 à 8 comme adsorbant.

## Patentansprüche

1. Kristallisierter Feststoff IM-20, der in gebrannter Form ein Röntgenbeugungsdiagramm aufweist, welches mindestens die Signale umfasst, die in der untenstehenden Tabelle aufgeführt sind:
| 2 theta (°) | dₕₖₗ(Å) | I/I₀ | 2 theta (°) | dₕₖₗ(Å) | I/I₀ |
|---|---|---|---|---|---|
| 3,49 | 25,27 | ss | 18,21 | 4,87 | ss |
| 6,95 | 12,72 | SS | 19,82 | 4,48 | ss |
| 7,02 | 12,59 | S | 20,70 | 4,29 | ss |
| 7,63 | 11,58 | s | 21,15 | 4,20 | ss |
| 7,79 | 11,34 | ss | 22,10 | 4,02 | ss |
| 8,38 | 10,54 | ss | 22,32 | 3,98 | s |
| 9,87 | 8,95 | ss | 22,57 | 3,94 | ss |
| 10,32 | 8,56 | s | 22,99 | 3,86 | ss |
| 10,90 | 8,11 | s | 23,39 | 3,80 | ss |
| 12,47 | 7,09 | ss | 24,05 | 3,70 | ss |
| 12,98 | 6,81 | ss | 24,30 | 3,66 | ss |
| 13,91 | 6,36 | ss | 24,70 | 3,60 | ss |
| 14,05 | 6,30 | ss | 25,10 | 3,54 | ss |
| 15,27 | 5,80 | ss | 25,30 | 3,52 | ss |
| 15,89 | 5,57 | ss | 28,05 | 3,18 | ss |
| 17,59 | 5,04 | ss | 28,67 | 3,11 | ss |
wobei SS = sehr stark; m = mittel; s = schwach; S = stark; ms = mittelschwach; ss = sehr schwach ist und wobei er eine chemische Zusammensetzung aufweist, die durch die folgende allgemeine Formel ausgedrückt wird: mXO₂ : nGeO₂ : pZ₂O₃ : qR : sF : xW₂O, wobei R für eine oder mehrere organische Spezies steht, X für ein oder mehrere vierwertige(s) Element(e) steht, das/die sich von Germanium unterscheidet/unterscheiden, Z für mindestens ein dreiwertiges Element steht und F gleich Fluor ist, wobei m, n, p, q, s und w jeweils für die Molanzahl von XO₂, GeO₂, Z₂O₃, R, F und H₂O stehen und m im Bereich von 0,3 bis 0,8 liegt, n im Bereich von 0,2 bis 0,7 liegt, p im Bereich von 0 bis 0,1 liegt, q im Bereich von 0 bis 0,2 liegt, s im Bereich von 0 bis 0,2 liegt und w im Bereich von 0 bis 1 liegt.

2. Kristallisierter Feststoff IM-20 nach Anspruch 1, wobei X Silicium ist.

3. Kristallisierter Feststoff IM-20 nach Anspruch 1 oder Anspruch 2, wobei Z Aluminium ist.

4. Kristallisierter Feststoff IM-20 nach einem der Ansprüche 1 bis 3, wobei das Molverhältnis {(n+m)/p} größer oder gleich 10 ist, p im Bereich von 0,005 bis 0,02 liegt, q im Bereich von 0 bis 0,2 liegt, s im Bereich von 0 bis 0,2 liegt und w im Bereich von 0 bis 1 liegt.

5. Verfahren zur Herstellung eines kristallisierten Feststoffs IM-20 nach einem der Ansprüche 1 bis 4, welches darin besteht, in wässrigem Milieu mindestens eine Quelle mindestens eines Germaniumoxids, mindestens eine Quelle mindestens eines Oxids XO₂, möglicherweise mindestens eine Quelle mindestens eines Oxids Z₂O₃, mindestens eine Quelle von Fluoridionen und mindestens eine organische Spezies R zu vermischen, wobei die molare Zusammensetzung der Reaktionsmischung derart ist, dass:
| | |
|---|---|
| (XO₂+GeO₂)/Z₂O₃ | : mindestens 5, |
| H₂O/(XO₂+GeO₂) | : 1 bis 50, |
| R/(XO₂+GeO₂) | : 0,3 bis 3, |
| XO₂/GeO₂ | : 0,5 bis 10, |
| F/(XO₂+GeO₂) | : 0,1 bis 2, |
und es sich bei der organischen Spezies R um das 1-Butyl-3-methylimidazoliumkation handelt, und die Mischung anschließend einer hydrothermalen Behandlung unterzogen wird, bis sich der kristallisierte Feststoff IM-20 bildet.

6. Herstelfungsverfahren nach Anspruch 5, derart, dass der Reaktionsmischung Kristallisationskeime zugesetzt werden.

7. Verwendung des kristallisierten Feststoffs IM-20 nach einem der Ansprüche 1 bis 4, oder hergestellt nach einem der Ansprüche 5 bis 8, als Adsorptionsmittel.

## Claims

1. An IM-20 crystalline solid having, in its calcined form, an X ray diffraction diagram including at least the peaks shown in the table below:
| 2 theta (°) | dₕₖₗ (Å) | I/I₀ | 2 theta (°) | dₕₖₗ (Å) | I/I₀ |
|---|---|---|---|---|---|
| 3.49 | 25.27 | Vw | 18.21 | 4.87 | Vw |
| 6.95 | 12.72 | Vs | 19.82 | 4.48 | Vw |
| 7.02 | 12.59 | S | 20.70 | 4.29 | Vw |
| 7.63 | 11.58 | W | 21.15 | 4.20 | Vw |
| 7.79 | 11.34 | Vw | 22.10 | 4.02 | Vw |
| 8.38 | 10.54 | Vw | 22.32 | 3.98 | W |
| 9.87 | 8.95 | Vw | 22.57 | 3.94 | Vw |
| 10.32 | 8.56 | W | 22.99 | 3.86 | Vw |
| 10.90 | 8.11 | W | 23.39 | 3.80 | Vw |
| 12.47 | 7.09 | Vw | 24.05 | 3.70 | Vw |
| 12.98 | 6.81 | Vw | 24.30 | 3.66 | Vw |
| 13.91 | 6.36 | Vw | 24.70 | 3.60 | Vw |
| 14.05 | 6.30 | Vw | 25.10 | 3.54 | Vw |
| 15.27 | 5.80 | Vw | 25.30 | 3.52 | Vw |
| 15.89 | 5.57 | Vw | 28.05 | 3.18 | Vw |
| 17.59 | 5.04 | Vw | 28.67 | 3.11 | vw |
in which: Vs = very strong; S = strong; M = medium; Mw = medium weak; W = weak; Vw = very weak, and having a chemical composition expressed by the following general formula: mXO₂: nGeO₂: pZ₂O₃: qR: sF: wH₂O, in which R represents one or more organic species, X represents one or more tetravalent element(s) other than germanium, Z represents at least one trivalent element and F is fluorine, m, n, p, q, s and w respectively representing the number of moles of XO₂, GeO₂, Z₂O₃, R, F and H₂O and m is in the range 0.3 to 0.8, n is in the range 0.2 to 0.7, p is in the range 0 to 0.1, q is in the range 0 to 0.2, s is in the range 0 to 0.2 and w is in the range 0 to 1.

2. An IM-20 crystalline solid according to claim 1, in which X is silicon.

3. An IM-20 crystalline solid according to claim 1 or claim 2, in which Z is aluminium,

4. An IM-20 crystalline solid according to one of claims 1 to 3, in which the molar ratio {(n+m)/p} is 10 or more, p is in the range 0.005 to 0.02, q is in the range 0 to 0.2, s is in the range 0 to 0.2 and w is in the range 0 to 1.

5. A process for preparing an IM-20 crystalline solid according to one of claims 1 to 4, consisting of mixing, in an aqueous medium, at least one source of at least one oxide of germanium, at least one source of at least one oxide XO₂, optionally at least one source of at least one oxide Z₂O₃, at least one source of fluoride ions and at least one organic species R, the molar composition of the reaction mixture is such that:
| | |
|---|---|
| (XO₂ + GeO₂)/Z₂O₃ | : at least 5; |
| H₂O/(XO₂ + GeO₂) | : 1 to 50; |
| R/(XO₂+GeO₂) | : 0.3 to 3; |
| XO₂/GeO₂ | : 0.5 to 10; |
| F/(XO₂ + GeO₂) | : 0.1 to 2, |
said organic species R is the 1-butyl-3-methylimidazolium cation, then carrying out hydrothermal treatment of said mixture until said IM-20 crystalline solid is formed.

6. A preparation process according to claim 5, in which the reaction mixture is supplemented with seeds.

7. Use of an IM-20 crystalline solid according to one of claims 1 to 4 or prepared in accordance with one of claims 5 or 6, as an adsorbent.
